Europäisches Patentamt

(19) European Patent Office

Office européen des brevets

(11) Publication number: **0 061 888**
**B1**

(12) **EUROPEAN PATENT SPECIFICATION**

(45) Date of publication of patent specification: **16.04.86**    (51) Int. Cl.⁴: **F 24 J 3/00, F 25 B 15/12**

(21) Application number: **82301508.6**

(22) Date of filing: **23.03.82**

(54) Staged adsorption/resorption heat pump.

(30) Priority: **27.03.81 GB 8109653**

(43) Date of publication of application:
**06.10.82 Bulletin 82/40**

(45) Publication of the grant of the patent:
**16.04.86 Bulletin 86/16**

(84) Designated Contracting States:
**DE FR GB IT SE**

(56) References cited:
**DE-A-3 018 739**
**DE-C- 640 006**
**FR-A-2 377 589**
**GB-A-1 567 945**
**GB-A-1 582 007**
**GB-A-2 047 865**
**GB-A-2 076 523**
**US-A-2 003 310**
**US-A-3 124 939**

(73) Proprietor: **Exxon Research and Engineering
Company**
**P.O.Box 390 180 Park Avenue**
**Florham Park New Jersey 07932 (US)**

(72) Inventor: **Moss, Gerald Dr.**
**"Trevose" Sarajac Avenue**
**East Challow Wantage Oxfordshire (GB)**

(74) Representative: **Field, Roger Norton et al
ESSO Engineering (Europe) Ltd. Patents &
Licences Apex Tower High Street
New Malden Surrey KT3 4DJ (GB)**

Courier Press, Leamington Spa, England.

**Description**

This invention relates to a heat pump involving adsorption, absorption and resorption.

The staged adsorption/absorption heat pump is capable of giving a coefficient of performance (C.O.P.) which is comparable with that of a vapour compression machine, but only over a restricted range of temperatures. At low source temperatures the vapour pressure of the working fluid is very low when water is used and this limits the pumping capacity. At high sink temperature crystallisation of the salts in the strong solution is a problem. These two limitations restric the operating range of the water/lithium bromide heat pump to about 2°C to 50°C, whereas a satisfactory heat pump for domestic purposes should preferably pump heat from −10°C to 60°C.

It might be thought that a solution to both of these operating limitations would be to substitute carbon dioxide for water as the absorbate/adsorbate. Unfortunately carbon dioxide which is not unduly toxic and which present no fire hazards, has a very high vapour pressure and a critical temperature of only 31°C so that whilst it can be adsorbed strongly by 5A zeolite molecular sieve and by activated charcoal at relatively low pressures and temperatures as high as 150°C it cannot be used in a simple absorption cycle in which the working fluid is required to condense at the heat sink temperature, i.e. 60°C.

We have now overcome this problem and according to this invention a combined adsorption and resorption process uses a resorption heat pump comprising a generator, resorber, evaporator and an absorber. In this process in an adsorption step heat is supplied from an adsorber to the generator as the result of adsorbate being adsorbed in adsorbent and absorbate is stripped off from the generator and resorbed in the resorber, the heat of resorption being capable of being supplied to the load. Thereafter absorbate enriched absorbent from the resorber is sent to the evaporator, absorbate is evaporated in the evaporator and passed to the absorber, the heat of absorption being capable of being delivered to the load. When the adsorber is charged with adsorbate, thereafter in a desorption step adsorbate is stripped from the absorbent by external head supplied to the adsorber and vaporised adsorbate is sent to the resorber where it is absorbed, the heat of resorption being capable of being supplied to the load.

Also sensible heat is supplied to the generator whereby absorbate is stripped off from the generator and sent to the resorber. The adsorption and desorption steps operate alternately. Also there may be flow, intermittent or continuous, of absorbent or a component of the absorbent to the absorber or generator from the evaporator or the resorber, whereby excessive amount of absorbent or an excessive concentration of a component of the absorbent in the resorber and evaporator is avoided.

In the process of this invention the absorbate and adsorbate are one and the same substance. Such a substance should preferably have a relatively high latent heat of evaporation, a relatively high vapour pressure, e.g., above atmosphere at the lower temperatures, and be very soluble in at least one other lower vapour pressure substance, i.e. the absorbent. It should be stable up to temperatures of at least 300°C and it should be capable of being adsorbed. The preferred adsorbate/absorbate is carbon dioxide.

The absorbents used in the resorber and evaporator need not be the same as that used in the generator and absorber. It is advantageous if the absorbent used in the generator and absorber exhibits a larger negative deviation from Raoult's Law than that used in the resorber and evaporator. By this means the evaporation process in the evaporator is facilitated and the absorbate absorption step balancing the adsorbate desorption step in the absorber is facilitated.

The absorbent can be a variety of substances, for example an alkali carbonate solution, certain amines, alcohols, water or mineral oils. Alternatively a mixture of the basic alkali metal salt or hydroxide e.g. $K_2CO_3$ preferably 10 to 40 wt % and a minor proportion of a sterically hindered amine (such as disclosed in our UK patent specification 1567945) may be used. The preferred absorbent for absorbing carbon dioxide is a non-aqueous substance such as propylene carbonate for the resorber and evaporator and an aqueous solution of a sterically hindered amine, for example a cyclo aliphatic diamine such as N-cyclo hexyl—1,3—propane diamine, for the generator and absorber.

The preferred substance for use as an adsorbent when the adsorbate is carbon dioxide is a zeolite molecular sieve such as 5A, Y or 13X. Also some types of woven activated charcoal cloth are suitable for carbon dioxide.

In the process of the invention heat is supplied from the adsorber to the generator when adsorption occurs in the adsorber. Thereafter an external source of heat is used to strip adsorbate from the adsorber.

Apparatus for carrying out the process of the invention comprises an adsorber, means for transferring heat from the adsorber to a generator and means for transferring vapour i.e. vaporised absorbate, from the generator to a resorber capable of supplying heat to the load. These means include a valve. There are means for transferring liquid, i.e. absorbate-enriched absorbent, from the resorber to an evaporator and means for transferring liquid from the evaporator to the resorber. The evaporator is provided with means for evaporating vapour, i.e. absorbate, therefrom. There are means including a valve for transferring vapour, i.e. absorbate vapour, from the evaporator independently to the adsorber and to an absorber, the absorber being capable of supplying heat to the load. There are means for transferring liquid i.e. absorbate-enriched absorbent from the absorber to the generator and means for transferring liquid from the generator to the absorber. There are also means for supplying external heat to the absorber and means including a valve for transferring vapour from the absorber to the resorber. There may be means for allowing flow of absorbent or a component of absorbent to the absorber or generator from the evaporator or the resorber.

The adsorber is provided with means for transferring heat to the generator. This is conveniently by means of two coils of a heat exchanger, one coil located in the adsorber and one coil located in the generator. They are connected together by conduits one being provided with a circulation pump.

There are also means for supplying heat to the adsorber and this is preferably by means of a resistive heater whereby use can be made of off-peak electricity. One suitable means for supplying heat to and for withdrawing heat from the adsorber comprises a heat exchanger like that described in our patent specification GB 8036901 (EP—A—0 052 422), wherein it is possible for one heat exchanger to have two pipeworks one for supplying heat and one for withdrawing heat.

Whatever form of heating is used it should preferably be capable of supplying heat by direct contact with the adsorbent which is housed in the adsorber. There are means for transferring vapour, i.e. adsorbate, from the adsorber to the resorber. This is preferably a valved conduit.

Means for transferring vapour from the generator to the resorber is preferably a valved conduit connecting the top of the generator with the resorber. In order that the resorber can provide heat to the load preferably it houses within a heat exchanger through which a heat transfer fluid circulates delivering heat to the load. Less desirably the heat exchanger is located external to the resorber.

The means for transferring absorbate-enriched absorbent from the resorber to the evaporator is preferably a conduit having a pressure control valve. Liquid is transferred from the evaporator to the resorber by a conduit preferably provided with a solution pump. The pressure control valve is designed to balance the flow of solution provided by the solution pump.

The evaporator has means for evaporating the absorbate therefrom. This is preferably a heat exchanger located within the evaporator. Less desirably this heat exchanger is located external of the evaporator. The source of heat supplying heat to this exchanger which may be the extended surface type is preferably ambient air.

In this evaporator absorbate is evaporated at a relatively low pressure and temperature. There are means for transferring vapour from the evaporator independently to the adsorber and to the absorber. Since vapour must always be transferred to the absorber but only at times to the adsorber it is preferred that there be a conduit connecting the evaporator with the absorber having a branch conduit with a valve connected to the bottom of the adsorber. By this means absorbate vapour still at low pressure is transmitted to the absorber where it is absorbed giving heat to the load, preferably by means of a heat exchanger located within the absorber. Less disrably the heat exchanger is located external of the absorber. In the heat exchanger it is preferred to circulate water which when heated provides heat to the load.

The means for transferring liquid from the absorber to the generator and from the generator to the absorber is preferably similar to those means provided for transferring liquid from the evaporator to the resorber and vice-versa. This liquid i.e. absorbate-enriched absorbent, transferred from the absorber to the generator is preferably by means of a conduit having a solution pump and liquid transferred from the generator to the absorber is preferably by means of a conduit having a pressure control valve, the valve being designed to balance the flow of solution provided by the solution pump.

Using carbon dioxide as absorbate/adsorbate with propylene carbonate as absorbent in the resorber and in the evaporator and an aqueous solution of a basic alkali metal salt or hydroxide and a hindered amine as absorbent in the generator and in the absorber, in due course there may be an unwanted accumulation of water in the resorber, water having been carried over as water vapour with the carbon dioxide passing from the generator to the resorber. Since propylene carbonate is heavier than water and the water forms as a layer on the propylene carbonate this water may be removed by means of a conduit connected to the resorber about half way up, and to either the generator, the absorber or preferably the conduit joining the generator with the absorber and which is provided with the solution pump. This connecting conduit should be provided with a non-return valve allowing only water to pass from the resorber and preventing fluid from entering the resorber. With correct positioning it can be seen that water is automatically drained off when it forms as a layer on the propylene carbonate.

Other similar devices can be used to prevent an undue concentration of absorbent or component of absorbent where it is not wanted. Thus if the unwanted absorbent or component is the heavier of the liquids the above-mentioned connecting conduit could be connected to the bottom of the resorber. As another alternative for gases nor appreciably soluble in water, e.g. $CO_2$ the gas entering the resorber from the generator can be provided with a steam trap and condensed steam, e.g. water removed and returned to the generator. Gas entering the resorber from the generator is considerably cooled so that condensation of steam is easily achieved.

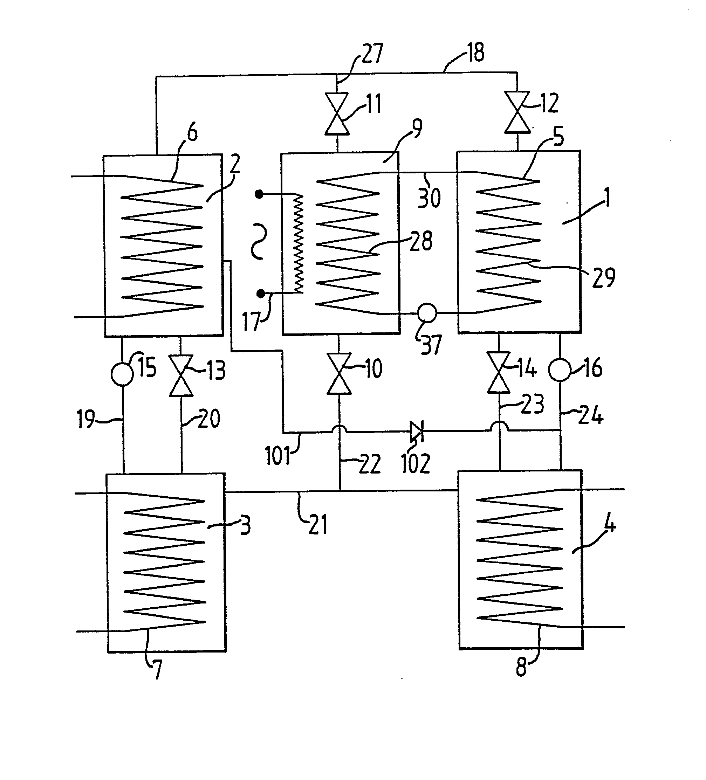

The invention is now described with reference to the drawing which shows a preferred apparatus.

A generator 1 is connected by a conduit 18 having a valve 12 to the top of a resorber 2, the resorber 2 housing a heat exchanger 6 capable of supplying heat to the load. The resorber 2 is connected by conduit 19 having a solution pump and by conduit 20 having a pressure control valve 13 to an evaporator 3. This evaporation 3 which houses a heat exchanger 7 is connected by conduit 21 to an absorber 4 which houses a heat exchanger 8 capable of supplying heat to the load. The absorber 4 is connected by conduit 24 having a solution pump 16 and by a conduit 23 having a pressure control valve 14 to the generator 1.

There is an adsorber 9 connected by a conduit 27 having a valve 11 to the conduit 18 and by a conduit 22 having a valve 10 to the conduit 21. There is a heat exchanger 5 having coils 28 and 29 located respectively in the adsorber 9 and the generator 1 connected together by a conduit 30 having a circulation pump 37. The adsorber 9 is also provided with a resistive heater 17.

There is a conduit 101 having a non-return valve 102 connecting resorber 2 with conduit 24.

The adsorbent housed in adsorber 9 is zeolite molecular sieve 5A, the absorbent housed in generator 1 and absorber 4 is an aqueous solution of $K_2CO_3$ with a minor proportion of N-cyclo hexyl 1,3-propane diamine, the adsorbent housed in resorber 2 and evaporator 3 is propylene carbonate and the adsorbate/absorbate is carbon dioxide.

The system operators as follows: sensible heat from the adsorber 9 is supplied to the generator 1 by means of coil 29 of heat exchanger 5. Carbon dioxide is therefore stripped off from the generator 1 and passes through conduit 18, valve 12 being open and valve 11 being closed, to the top of the resorber 2. Here the carbon dioxide is resorbed in the absorbent, propylene carbonate giving off heat which is extracted and conveyed to the load by means of heat exchanger 6.

The carbon dioxide-enriched solution in the resorber 2 is exchanged for weak solution from the evaporator 3, by passage respectively through conduits 20 and 19, the pressure control valve 13 balancing the flow provided by the solution pump 15 so that the pressure difference of the pump is maintained and the valve 102 in line 101 being closed.

The carbon dioxide which is carried with the enriched solution is evaporated in the evaporator 3 at a relatively low temperature by means of the heat supplied from ambient air by a heat exchanger 7.

The vaporised carbon dioxide released in evaporator 3 is absorbed still at low pressure by the weak aqueous solution of ($K_2CO_3$ and N-cyclo hexyl—1,3-propane) diamine in the absorber 4. Whilst this carbon dioxide is only passing from evaporator 3 to absorber 4 via conduit 21, the valve 10 in conduit 22 is closed. The absorption of carbon dioxide in the absorber 4 releases heat and by means of the heat exchanger 8 this heat can be delivered to the load. The carbon dioxide-enriched solution in absorber 4 is exchanged for weak solution in the generator 1, by passage respectively through conduits 24 and 23, the pressure control valve 14 balancing the flow provided by the solution pump 16 so that the pressure difference of the pump is maintained. This exchange process is continuously repeated.

The heat supplied to the generator 1 comes from the adsorber 9 by means of the heat exchanger 29. Heat is supplied from the adsorber 9 to the generator 1 during the adsorption step when valve 10 is open and valve 11 is shut. During this adsorption step valve 12 is open and valves 13 and 14 are always operating so that they balance the flow provided by solution pumps 15 and 16 so that the pressure differences of the pumps are maintained. When the adsorption step is completed valve 10 is closed and valve 11 is opened. At this point valve 12 is also closed and the pressures in the generator 1 and absorber 4 are allowed to equalise so that pump 16 merely drives a pump-around system.

Heat is then supplied to the adsorber 9 by means of the resistive heater 17 and desorption occurs, the carbon dioxide released being resorbed in the resorber 2, delivering heat to the load via heat exchange 6, being evaporated in the evaporator 3 and accumulating in the stripped solution held in absorber 4 and generator 1, also delivering heat to the load via the heat exchanger 8 in absorber 4.

When the desorption step is completed valve 12 is opened and valves 10 and 11 are closed and the cycle commences again.

To avoid an excessive amount of water in the resorber 2, the conduit 101 with non-return valve 102 allows the water collected as a water layer to flow from the resorber 2 to the conduit 24 connecting the generator 1 with the absorber 4.

5A zeolite molecular sieve will hold about 15% by weight of $CO_2$ at 100°C and at a pressure of 1000 mm of Hg, but is virtually stripped at this pressure at a temperature exceeding 200°C. It is therefore possible to deliver heat of adsorption from adsorber 9 to the generator 1 at temperatures in excess of 100°C and usually possible to deliver heat from heat exchangers 6 and 8 to the load at temperatures in excess of 50°C. The working pressure in the evaporator 3 and absorber 4 will exceed atmospheric pressure considerably, and so a compact form of construction could be used.

In view of its comparative compactness the heat pump of this invention is particularly suited for use in motor cars as an air conditioner where it can obtain its heat from the exhaust gases.

**Claims**

1. A combined adsorption and resorption process using a resorption heat pump comprising a generator, a resorber, evaporator and an absorber in which:

(1) absorbate enriched absorbent from the resorber is sent to the evaporator

(2) adsorbate is evaporated in the evaporator and passed to the absorber, the heat of absorption being capable of being delivered to the load and alternately

(3) adsorbate is adsorbed by adsorbent housed in an adsorber, heat of adsorption is supplied from the adsorber to the generator, adsorbate is thereby stripped off from the generator and resorbed in the resorber, the heat of resorption being capable of being supplied to the load, and

(4) when the adsorber is charged with adsorbate, thereafter adsorbate is stripped from the adsorbent by external heat supplied to the adsorber, vaporised adsorbate is sent to the resorber where it is absorbed, the heat of resorption being capable of being supplied to the load, and sensible heat is supplied to the generator whereby absorbate is stripped off from the generator and sent to the resorber, and in which process the adsorbate is the same as the absorbate.

2. A process according to claim 1 wherein the adsorbate/absorbate is carbon dioxide and the adsorbent is zeolite molecular sieve.

3. A process according to either of claims 1 and 2 wherein the absorbent used in the generator and absorber exhibits a larger negative deviation from Raoult's Law than that used in the resorber and evaporator.

4. A process according to claim 3 wherein the absorbent used in the resorber and the evaporator is propylene carbonate and that used in the generator and the absorber is an aqueous solution of a basic alkali metal salt or hydroxide and a sterically hindered amine.

5. A process according to claim 4 wherein excess water is transferred from the resorber to a conduit connecting the generator with the absorber.

6. An apparatus suitable for carrying out the process according to any one of the claims 1 to 4 which comprises:

(1) an adsorber,

(2) means for transferring heat from the adsorber to a generator,

(3) means including a valve for transferring vapour from the generator to a resorber, the resorber being capable of supplying heat to the load,

(4) means for transferring liquid from the resorber to an evaporator,

(5) means for transferring liquid from the evaporator to the resorber,

(6) means for evaporating vapour from the evaporator,

(7) means for transferring vapour from the evaporator to an absorber, the absorber being capable of supplying heat to the load,

(8) means including a valve for transferring vapour from the evaporator to the adsorber

(9) means for transferring liquid from the absorber to the generator,

(10) means for transferring liquid from the generator to the absorber,

(11) means for supplying external heat to the adsorber and

(12) means including a valve for transferring vapour from the adsorber to the resorber.

7. An apparatus according to claim 6 wherein there is a conduit provided with a non-return valve interconnecting the resorber about half-way up with either the generator, the absorber or the conduit provided with a solution pump which interconnects the generator and the absorber.

8. An apparatus according to either of claims 6 and 7 wherein the resorber is capable of transferring heat to the load by means of a heat exchanger housed therein.

9. An apparatus according to any one of claims 6 to 8 wherein there is a conduit connecting the evaporator with the absorber with a branch conduit having a valve connected to the bottom of the adsorber.

10. An apparatus according to any one of Claims 6 to 9 wherein the absorber is capable of transferring heat to the load by means of a heat exchanger housed therein.

**Patentansprüche**

1. Kombiniertes Adsorptions- und Resorptionsverfahren unter Verwendung einer Resorptionswärmepumpe mit einem Generator, einem Resorber, einem Verdampfer und einem Absorber, bei dem:

(1) mit Absorbat angereicherter sorbierender Stoff von dem Resorber zum Verdampfer geschickt wird,

(2) Adsorbat in dem Verfampfer verdampft und zu dem Absorber geleitet wird, wobei die Absorptionswärme an die Last abgegeben werden kann und abwechselnd

(3) Adsorbat vom dem adsorbierenden Stoff adsorbiert wird, der in einem Adsorber untergebracht ist, Adsorptionswärme von dem Adsorber zum Generator geliefert wird, Adsorbat dabei aus dem Generator abgezogen und im Resorber resorbiert wird und die Resorptionswärme an die Last geliefert werden kann, und

(4) wenn der Adsorber mit Adsorbat beladen wird das Adsorbat von dem adsorbierenden Stoff durch dem Adsorber zugeführte externe Wärme getrennt wird und das verdampfte Adsorbat zum Resorber geschickt wird, wo es absorbiert wird, wobei die Resorptionswärme der Last zuführbar ist und Eigenwärme dem Generator zugeführt wird, wodurch Absorbat aus dem Generator abgezogen und zum Resorber geleitet wird, und wobei in dem Verfahren das Adsorbat gleich wie das Absorbat ist.

2. Verfahren nach Anspruch 1, dadurch gekennzeichnet, daß die adsorbierte oder absorbierte Substanz Kohlendioxid und der adsorbierende Stoff ein zeolithisches Molekularsieb ist.

3. Verfahren nach Anspruch 1 oder 2, dadurch gekennzeichnet, daß der in dem Generator und dem Absorber verwendete absorbierende Stoff eine größere negative Abweichung vom Raoult'schen Gesetz hat als der im Resorber und Verdampfer verwendete Stoff.

4. Verfahren nach Anspruch 3, dadurch gekennzeichnet, daß der im Resorber und im Verdampfer verwendete absorbierende Stoff Propylencarbonat und der in dem Generator und dem Absorber verwendete eine wässrige Lösung von einem basischen Alkalimetallsalz oder Hydroxid und einem sterisch gehinderten Amin ist.

5. Verfahren nach Anspruch 4, dadurch gekennzeichnet, daß Überschußwasser von dem Resorber zu einer Leitung übertragen wird, die den Generator mit dem Absorber verbindet.

6. Vorrichtung zur Durchführung des Verfahrens nach einem der Ansprüche 1 bis 4, gekennzeichnet durch:

(1) einen Adsorber,

(2) Mittel zum Übertragen von Wärme von dem Adsorber zu einem Generator,

(3) Mittel einschließlich eines Ventils zum Übertragen vom Dampf von dem Generator zu einem Resorber, der Wärme an die Last führen kann,

(4) Mittel zum Übertragen von Flüssigkeit von dem Resorber zu einem Verdampfer,

(5) Mittel zum Übertragen von Flüssigkeit von dem Verdampfer an den Resorber,

(6) Mittel zum Verdampfen von Dampf von dem Verdampfer,

(7) Mittel zum Übertragen von Dampf von dem Verdampfer an einen Absorber, der Wärme an die Last geben kann,

(8) Mittel einschließlich eines Ventils zum Übertragen von Dampf von dem Verdampfer an den Adsorber,

(9) Mittel zum Übertragen von Flüssigkeit von dem Absorber an den Generator,

(10) Mittel zum Übertragen von Flüssigkeit von dem Generator an den Absorber,

(11) Mittel zum Zuführen von externer Wärme an den Adsorber, und

(12) Mittel einschließlich eines Ventils zum Übertragen von Dampf von dem Adsorber an den Resorber.

7. Vorrichtung nach Anspruch 6, dadurch gekennzeichnet, daß eine Leitung mit einem Rückschlagventil vorgesehen ist, die den Resorber etwa auf halbem Weg mit dem Generator, dem Absorber oder der Leitung verbindet, die mit einer Lösungspumpe versehen ist, welche den Generator und den Absorber verbindet.

8. Vorrichtung nach Anspruch 6 oder 7, dadurch gekennzeichnet, daß der Resorber in der Lage ist, Wärme an die Last durch einen darin untergebrachten Wärmeaustauscher zu übertragen.

9. Vorrichtung nach einem der Ansprüche 6 bis 8, dadurch gekennzeichnet, daß ein Leitung den Verdampfer mit dem Absorber mit einer Verzweigungsleitung verbindet, die ein Ventil aufweist, das an den Boden des Adsorbers angeschlossen ist.

10. Vorrichtung nach einem der Ansprüche 6 bis 9, dadurch gekennzeichnet, daß der Absorber in der Lage ist, Wärme an die Last zu übertragen, und zwar durch einen darin untergebrachten Wärmeaustauscher.

**Revendications**

1. Procédé d'adsorption et de résorption combinées utilisant une pompe à chaleur à résocption comprenant un générateur, un résorbeur, un évaporateur et un absorbeur dans lequel:

(1) de l'absorbant enrichi en absorbat provenant du résorbeur est envoyé à l'évaporateur

(2) de l'adsorbat est vaporisé dans l'évaporateur et envoyé à l'absorbeur, la chaleur d'absorption pouvent être transmise à la charge et alternativement

(3) de l'adsorbat est adsorbé par de l'adsorbant logé dans un adsorbeur, de la chaleur d'adsorption est fournie de l'adsorbeur au générateur, de l'adsorbat est par là chassé du générateur et résorbé dans le résorbeur, la chaleur de résorption pouvant être fournie à la charge, et

(4) quand l'adsorbeur est chargé d'adsorbat, de l'adsorbat est ensuite chassé de l'adsorbant par de la chaleur externe fournie à l'adsorbeur, de l'adsorbat vaporisé est envoyé au résorbeur où il est absorbé, la chaleur de résorption pouvant être fournie à la charge, et de la chaleur sensible est fournie au générateur de sorte que de l'absorbat est chassé du générateur et envoyé au résorbeur, et dans lequel procédé l'adsorbat est identique à l'absorbat.

2. Procédé selon la revendication 1 dans lequel l'adsorbat/absorbat est du dioxyde de carbone et l'adsorbant est un tamis moléculaire zéolite.

3. Procédé selon la revendication 1 ou 2 dans lequel l'absorbant servant dans le générateur et dans l'absorbeur présente un plus grand écart négatif par rapport à la loi de Raoult que celui utilisé dans le résorbeur et dans l'évaporateur.

4. Procédé selon la revendication 3 dans lequel l'absorbant servant dans le résorbeur et dans l'évaporateur est du carbonate de propylène et celui servant dans le générateur et dans l'absorbeur est une solution aqueuse d'un sel ou hydroxyde de métal alcalin basique et d'une amine à empêchement stérique.

5. Procédé selon la revendication 4 dans lequel de l'eau en excès est transférée du résorbeur à un conduit reliant le générateur à l'absorbeur.

6. Appareil convenable pour la mise en oeuvre du procédé suivant l'une quelconque des revendications 1 à 4 qui comprend:

(1) un adsorbeur,

(2) des moyens de transfert de chaleur de l'adsorbeur générateur,

(3) des moyens comportant une vanne pour le transfert de vapeur du générateur à une résorbeur, le résorbeur étant capable de fournir de la chaleur à la charge,

(4) des moyens de transfert de liquide du résorbeur à une évaporateur,

(5) des moyens de transfert de liquide de l'évaporateur au résorbeur,

(6) des moyens de vaporisation de vapeur à partir de l'évaporateur,

(7) des moyens de transfert de vapeur de l'évaporateur à un absorbeur, l'absorbeur étant capable de fournir de la chaleur à la charge,

(8) des moyens comportant une vanne pour le transfert de vapeur de l'évaporateur à l'adsorbeur,

(9) des moyens de transfert de liquide de l'absorbeur au générateur,

(10) des moyens de transfert de liquide du générateur à l'absorbeur,

(11) des moyens de fourniture de chaleur externe à l'adsorbeur et

(12) des moyens comportant une vanne pour le transfert de vapeur de l'adsorbeur au résorbeur.

7. Appareil selon la revendication 6 dans lequel un conduit muni d'une soupape de retenue relie le résorbeur environ à mi-hauteur avec soit le générateur, soit l'absorbeur soit le conduit muni d'une pompe à solution qui relie l'une à l'autre le générateur et l'absorbeur.

8. Appareil selon l'une quelconque des revendications 6 et 7, dans lequel le résorbeur est apte à transférer de la chaleur à la charge au moyen d'un échangeur thermique qui y est logé.

9. Appareil selon l'une quelconque des revendications 6 à 8, dans lequel est prévue une conduite reliant l'évaporateur à l'absorbeur comportant un conduit de dérivation présentant une vanne reliée à la base de l'adsorbeur.

10. Appareil selon l'une quelconque des revendications 6 à 9, dans lequel l'adsorbeur est apte à transférer de la chaleur à la charge au moyen d'un échangeur qui y est logé.